# EUROPEAN PATENT APPLICATION

(11) **EP 2 506 152 A1**
(43) Date of publication of application: **03.10.2012**
(21) Application number: 10833443.4
(22) Date of filing: 04.03.2010
(51) Int. Cl.: G06F 17/00, G06F 17/30

(54) **APPARATUS AND METHOD FOR ANALYZING RESEARCH INFORMATION ABOUT A RESEARCHER, AND COMPUTER-READABLE STORAGE MEDIUM FOR STORING COMPUTER-EXECUTABLE PROGRAM FOR THE METHOD**

(30) Priority: 24.11.2009 KR 20090114122
(71) Applicant: Korea Institute Of Science And Technology Information, Yuseong-gu Daejeon 305-333 (KR)
(72) Inventor: LEE, Mi Kyoung, Daejeon 305-727 (KR); JUNG, Han Min, Daejeon 305-755 (KR); KIM, Pyung, Daejeon 305-750 (KR); LEE, Seung Woo, Daejeon 302-981 (KR); YOU, Beom Jong, Daejeon 305-301 (KR)
(74) Representative: Hodsdon, Stephen James
(86) International application number: PCT/KR2010/001352
(87) International publication number: WO 2011/065630

(57) **Abstract**

Disclosed are an apparatus and method for analyzing research information about a researcher. According to the present invention, analysis information related to researchers-thesis titles, authors, affiliated institutions, bibliographic information, year, abstracts, country information-is used to analyze information extracted from researcher information, topic information, and year information as data according to significance, similarity, and frequency, and provide the data as a UI, in order to enable a more detailed view of the trends in a researcher's field of interest, allow the comprehensive viewing of main research topics and research topics of interest of researchers forming a researcher network, and enable searching of only researchers without having to perform many search steps, in order to also simultaneously view other experts in the main research fields of the researchers.

## Description

### Technical Field

The present invention relates to a technology for providing information related to a researcher through a reference analysis based on an ontology, and more particularly to an apparatus and a method for analyzing research information of a researcher, which analyze information extracted from researcher information, topic information, and year information as data according to a weight, a similarity, and a frequency by using analysis information related to the researcher such as a thesis title, an author, an affiliated institution, bibliographic information, year, an abstract, and country information and provide the data as a UI recognizable at a glance, and a computer-readable recording medium for recording a computer-executable program for the method.

### Background Art

In general, a semantic web technology refers to a new generation intelligent web technology by which a computer can understand what information resources are and also perform a logical inference. The semantic web is a web understandable by the computer, not a web understandable by a human after the human searches for desired information by using a mouse or a keyboard and identifies the information by his/her eyes as in a current computer. That is, the semantic web is the intelligent web communicatable between machines through a new type of language understandable by the computer instead of a current web designed for the human to conveniently read and interpret.

A principle of the semantic web is to change a meaning connected between information resources into a type of language understandable by the computer unlike a current web document mainly based on natural language understandable by the human. Through the semantic web, computers can interpret the meaning of information resources and process required works by themselves while the machines are exchanging their information.

An ontology technology based on an RDF (Resource Description Framework) and a topic map technology by an ISO (International Organization for Standardization) are mainly included in a research related to the current semantic web. The former refers to a technology for assigning metadata corresponding to language describing resources such as a resource (subject), an attribute (predicate), an attribute value (object), etc. to the current web and enables a meaning of information to be understood and the information to be processed. The latter refers to a technology for supporting a distribution management of information and knowledge by using XML (extensible Markup Language) of ISO, and has a dual structure including a knowledge layer and an information layer.

Once such a semantic web is implemented, the computer automatically processes information and thus productivity and efficiency of an information system can be maximized. Further, the computer can perform an electronic commerce by itself, and the technology can be applied to various fields such as a System Integration (SI) in an enterprise, an intelligent robot system, medical informatization, etc.

However, there were few fields to which such a semantic web is applied in the conventional arts, and also there was no technology which can efficiently grasp a research trend required for a research plan.

That is, researchers have expended much time and effort on designing the research, selecting cooperative researchers, setting a research direction and the like.

For example, a researcher A plans research on a field of "artificial intelligence" and searches for search sites in order to get information, but the researcher A experiences difficulty from the very start. The researcher wastes his time and effort since he wanders in mountains of information including the term of "artificial intelligence".

Further, a researcher B experiences difficulty in finding specialists whom he desires to work with. The researcher B tries to seek the specialists through a general search site and a personal connection, but there was no sufficient information to find optimal specialists.

Moreover, since there is no method of identifying a research trend of a particular researcher or statistics for a main research field, a technology for efficiently grasping the research trend required for the search plan by configuring a system and a method for analyzing research information of the researcher which analyze related information and provide the information recognizable at a glance.

### Detailed Description of the Invention

### Technical Problem

In order to solve the above-mentioned problems, the present invention provides an apparatus and a method for analyzing research information of a researcher, which display a research tendency of a particular researcher or statistics for a main research field and thus provide related information recognizable at a glance by searching for only the researcher once without performing multi-step searches in order to get required information, and a computer-readable recording medium for recording a computer-executable program.

### Technical solution

In accordance with an aspect of the present invention to solve the above-mentioned problem, there is provided an apparatus for analyzing research information of a researcher, the apparatus including an academic information service system for processing such that a knowledge information sharing service of analysis information related to the researcher such as a thesis title, an author, an affiliated institution, bibliographic information, a year, an abstract, a topic, and country information can be provided by performing a knowledge processing based on a URI (uniform Resource Identifier) and a DBMS (DataBase Management System); a researcher research information analysis system for extracting the analysis information related to the researcher from the academic information service system; an information extraction module for extracting researcher information, topic information, and year information from the researcher research information analysis system; and an analysis service module for analyzing the information extracted from the information extraction module as data according to a weight, a similarity, and a frequency, and providing the data. The researcher research information analysis system may extract a topic from an original text of a corresponding thesis of the researcher, extracts year information from meta-information of the thesis, converts data to data in a triple type by an ontology, and then stores the converted data. The information extraction module may fetch desired information by inferring correlation between triples through a query such as an SPARQL (Simple Protocol and RDF Query Language) when the researcher is input.

The analysis service module may include a researcher research trend service provider for displaying all main research topics of the corresponding researcher for each year based on the information extracted from the information extraction module, and visually displaying a trend of a corresponding topic for each year through a UI (User Interface). When there is a repeated topic in an equal year, the researcher research trend service provider may assign a weight to the repeated topic according to a frequency in the equal year and displaying the repeated topic together with the weight.

The analysis service module may include a researcher related topic service provider for extracting related topics by using a researcher network configured to have co-authors or a citation relation with the information extracted from the information extraction module, arranging the related topics, and visually displaying the related topics through a UI (User Interface). When the related topic is repeated, the researcher related topic service provider may assign a weight to the repeated related topic according to a frequency, and displaying the repeated related topic together with the weight.

The analysis service module may include a similar researcher service provider for comparing topics included in a list of all topics of the researcher with all topics of other researchers based on the information extracted from the information extraction module and visually displaying a list of researchers having a similarity higher than a set similarity through a UI (User Interface). The similarity may be obtained by calculating a percentage of each topic with respect to all topics in the list of the researcher and then summing percentages of topics identical to topics of another researcher in consideration of a frequency of the identical topics.

The analysis service module may include a related researcher recommendation service provider for extracting a plurality of topics having a high research frequency in all theses of the corresponding researcher based on the information extracted from the information extraction module, and visually displaying a list of researchers having many achievements for each corresponding topic through a UI (User Interface).

One or more of respective visualized UIs provided by the researcher research trend service provider, the researcher related topic service provider, the similar researcher service provider, and the related researcher recommendation service provider may be displayed as a semantic service component of an Ontoframe researcher page.

In accordance with another aspect of the present invention, there is provided a method of analyzing research information of a researcher, which uses a researcher research information analysis system providing analysis information related to the researcher such as a thesis title, an author, an affiliated institution, bibliographic information, a year, an abstract, a topic, country information, the method including the steps of: (a) extracting researcher information on the researcher, topic information, and year information from the research information analysis system; (b) inputting a researcher; (c) analyzing the researcher information on the researcher, the topic information, and the year information as data according to a weight, a similarity, and a frequency, and providing the data; and (d) visually displaying the provided analysis data through a UI (User Interface).

In the step (a), a topic in an original text of a corresponding thesis for each researcher may be extracted using the researcher research information analysis system, year information is extracted from meta-information of the thesis, data is converted to data in a triple type by an ontology, and the converted data is stored. In the step (b), related information may be extracted by inferring correlation between triples through a query such as an SPARQL (Simple Protocol and RDF Query Language) when the researcher is input.

The step (c) may include extracting all main research topics of the corresponding researcher for each year based on the information extracted in the step (b); visually displaying a trend of a corresponding topic for each year through a UI (User Interface); and, when there is a repeated topic in an equal year, assigning a weight to the repeated topic according to a frequency of the repeated topic in the equal year and displaying the repeated topic together with the weight.

The step (c) may include extracting related topics by using a researcher network configured to have co-authors or a citation relation with the information extracted in the step (b); arranging the related topics, and visually displaying the related topics through a UI (User Interface); and, when the related topic is repeated, assigning a weight to the repeated related topic according to a frequency, and displaying the repeated related topic together with the weight.

The step (c) may include comparing topics included in a list of all topics of the researcher with all topics of other researchers based on the information extracted in the step (b) and visually displaying a list of researchers having a similarity higher than a set similarity through a UI (User Interface); and obtaining the similarity by calculating a percentage of each topic with respect to all topics in the list of the researcher and then summing percentages of topics identical to topics of another researcher in consideration of a frequency of the identical topics.

The step (c) may include extracting a plurality of topics having a high research frequency in all theses of the corresponding researcher based on the information extracted in the step (b); and visually displaying a list of researchers having many achievements for each corresponding topic through a UI (User Interface).

The method may further include displaying one or more of respective visualized UIs provided by the researcher research trend service provider, the researcher related topic service provider, the similar researcher service provider, and the related researcher recommendation service provider as a semantic service component of an Ontoframe researcher page.

### Effects of the Invention

A conventional researcher tendency shows theses for each year written by a researcher or a research trend for each year based on an extracted representative topic of the researcher. However, according to an apparatus and a method for analyzing research information of the researcher of the present invention, topics in which the researcher is interested are all visualized for each year. Accordingly, the present invention has an effect of enabling a user to obtain a more detailed view of a trend for a topic field in which the researcher is interested, such as a time from which a research in a field A is started, a time where the research is most actively performed, a time where the research ends, a time from which a research in a field B is started, and a time where the research is most actively performed.

Further, there was no service for providing other information at a time through correlation in the conventional arts, but there was an effect of showing, at a glance, a main research topic of researchers included in a researcher network (configured by researchers having collaborated or peoples relevant to the research) and research topics which the researchers handle with interest.

Furthermore, in the conventional arts, since the service is provided through separately extracting a researcher (only topic information) and specialist information, the user first searches for the researcher and then gets the specialist information by searching for a topic found in the researcher information. However, according to the present invention, there is an effect of enabling the user to simultaneously view other specialists in the main research field of the researcher by searching for only the researcher once without multi-step searches.

### Brief Description of the Drawings

FIG. 1 illustrates a configuration of an apparatus for analyzing research information of a researcher according to an embodiment of the present invention,
FIG. 2 is a flowchart for describing a method of analyzing research information of a researcher according to an embodiment of the present invention,
FIG. 3 illustrates a trend of a corresponding topic for each year displayed by the researcher research trend service provider through a UI (User Interface),
FIG. 4 illustrates an example in which researchers involved in a related topic displayed by the researcher topic service provider are visually arranged through a UI,
FIG. 5 illustrates an example in which a list of similar researchers displayed by the similar researcher service provider is visually displayed,
FIG. 6 illustrates an example in which a list of researchers publishing many theses for each topic displayed by the related researcher recommendation service provider is visually displayed through a UI, and
FIG. 7 illustrates an example in which UI screens which can be displayed according to the present invention are displayed as semantic service components in the OntoFrame researcher page.

### <Description of Reference Numerals for Main Parts of the Drawings>

110: researcher research information analysis system
120: researcher topic information extractor
130: researcher research trend service provider
140: researcher related topic service provider
150: similar researcher service provider
160: related researcher recommendation service provider

### Best Mode for Carrying out the Invention

Terms or words used in this specification and claims are not limited to a general definition or a dictionary definition, and the terms or words should be interpreted as a meaning or a concept conforming to the technical idea of the present invention based on a principle in which an inventor can properly define the terms or the words in order to describe his/her invention in the best way.

Throughout the specification, when it is said that a part "includes" an element, it means that the part may further include other elements unless it is said that the part does not include other elements. Further, terms such as "...system", "...unit", "...er", "module" and the like refer to a unit for processing at least one function or operation, and they can be implemented by hardware or software, and a combination of the hardware and the software.

Hereinafter, an embodiment of the present invention will be described with reference to the drawing.

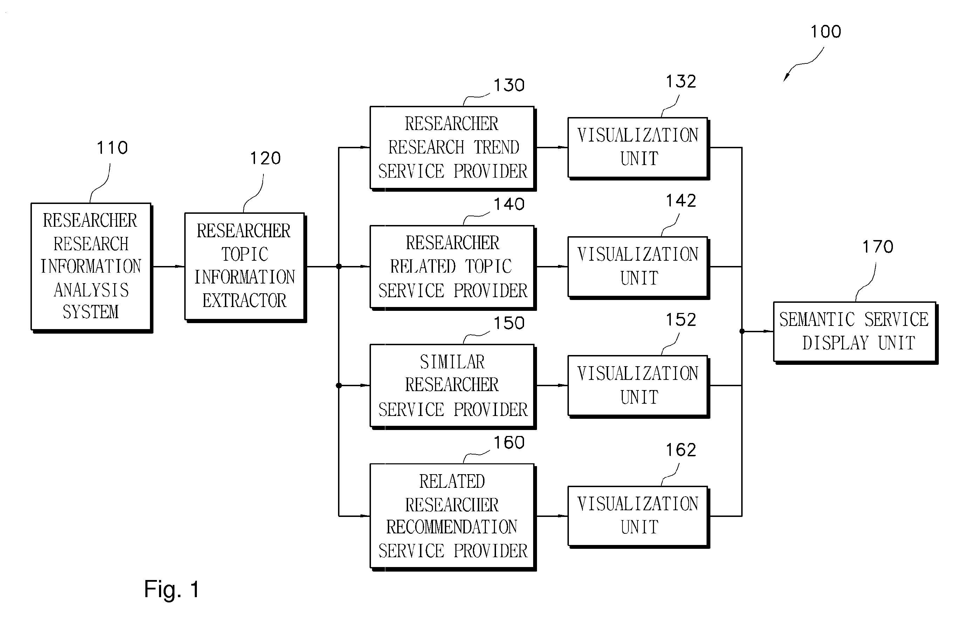

FIG. 1 illustrates a configuration of an apparatus for analyzing research information of a researcher according to an embodiment of the present invention. As shown in FIG. 1, the apparatus for analyzing research information of the researcher 100 includes a researcher research information analysis system 110 for providing analysis information of the researcher in an existing academic information service system, a researcher topic information extractor 120 for extracting researcher information, topic information, and year information related to the researcher from the researcher analysis information of the researcher research information analysis system 110, a researcher research trend service provider 130 for analyzing the information extracted from the researcher topic information extractor 120 as data according to a weight, a similarity, and a frequency and then providing the information, the researcher research trend service provider 130 being operated as an analysis service module, a researcher related topic service provider 140, a similar researcher service provider 150, and a related researcher recommendation service provider 160.

The researcher research information analysis system 110 is configured to extract the researcher analysis information from the academic information service system for providing a knowledge information sharing service of the researcher analysis information such as a thesis title, an author, an affiliated institution, bibliographic information, year, an abstract, and country information by processing the knowledge information based on a URI (Uniform Resource Identifier) and a DMBS (DataBase Management System).

Further, the researcher research information analysis system 110 is configured to identify a field of a research which has been performed by the researcher every year and a research trend which has been changed. Through this service, a user can indirectly know a field of a research performed by a corresponding researcher according to a time, and a change in a research trend.

To this end, the researcher research information analysis system 110 is configured to extract a topic from an original text of a corresponding thesis of the researcher, extract year information from meta-information of the thesis, convert data to data in a triple type by an ontology, and then use the converted data.

The converted data in the triple type is stored in an ontology inference engine. A triple means that data is expressed in a form of a subject, a predicate, and an object.

For example, if it is assumed that triples such as (thesis A, has, author 1), (thesis A, has, topic A), and (thesis A, is published, in 2008) are stored,- of course, actual triples may not be so simple and each author or topic is matched with a URI and thus an actual value is linked with another triple, so that an answer is obtained through several steps- the author, the topic, and the year can be linked with each other based on the thesis A.

As described, stored information can be countless triples. When a query for requesting to output other related information through an input of the author (researcher) is provided to the inference engine for the service, correlation between the triples is inferred through an SPARQL (Simple Protocol and RDF Query Language), and desired information is fetched. Such an operation is implemented in a service execution.

The SPARQL is an RDF query language configured by W3C.

In general, the achievement (thesis) has meta-information and an original text. The meta-information contains a plurality of information pieces such as an author (researcher), a co-author, publication information, a publication year, and a topic.

Specifically, the meta-information of the thesis contains a title, an author, an affiliated institution of the author, bibliographic information (society, journal), a year, an abstract, country information and the like. The user extracts desired information through the original text and the meta-information of the thesis (extracts the topic from the original text and extracts the title of the thesis, the author, the affiliated institution, the bibliographic information, the year, the abstract, and the country information from the meta-information), processes the information, converts the data to data in the triple type based on the ontology, and then uses it.

When the topic is not registered in the meta-information, the topic can be directly extracted from the original text.

Information required by the present invention has a form of "research-topic-year". Such information extracted based on the achievement are linked with each other, and the linked three information pieces are always stored.

Here, in the terms of DBMS (DataBase Management System), the database generally refers to a set of all data controlled by a central department (management department) and the DBMS collectively refers to hardware storing data other than the database and software for controlling a storage and a search of the data.

Finally, the DBMS corresponds to software for managing and supporting such that all application programs share the database and the DBMS plays a role of configuring/controlling/approaching the database.

Meanwhile, the URI (Uniform Resource Identifier) is used for indicating a location of a resource desired to approach on a World Wide Web (WWW) 12. The resource may include all of "a document", "an image", "a dynamic image", "a program", "an e-mail" and the like.

The researcher topic information extractor 120 is operated as an information extraction module for extracting researcher information, topic information, and year information from the researcher research information analysis system 110. That is, the researcher topic information extractor 120 is operated such that, when the researcher is input, desired information is fetched by inferring correlation between the triples, the year information is extracted, and mutual correlation is generated.

The researcher research trend service provider 130 operated as an analysis service module analyzes a trend for each year with respect to a particular main research topic for each year of a corresponding researcher through the information extracted form the researcher topic information extractor 120 corresponding to the information extraction module, processes the analyzed data, and visually displays the data through a UI (User Interface) for displaying the trend for each year of the corresponding topic.

Further, if there a repeated topic in the same year, the topic is assigned a weight and then displayed with the weight.

Such a service selects one researcher such as a researcher A from the data "researcher-subject-year" extracted from the researcher topic information extractor 120, extracts data "researcher A-topic-year" included in the researcher A, and then arranges the data for each year.

At this time, if there is the repeated topic in the same year, a weight is added to the topic. Accordingly, a main research field performed in a particular year can be identified and thus a research trend of the researcher can be grasped.

It is preferable that an additional point is given according to a rank of a journal (bibliographic information) or a society publishing the thesis, and a weight is assigned according to the occurrence number of thesis (weight*occurrence number) in an original service, but the present invention describes the service processed only according to the occurrence number of thesis without considering the rank of bibliographic information.

Specifically, if a topic A appears five times and a topic B appears only one time in the same year, the topic A is set to five points and the topic B is set to one point. The occurrence number of topics is counted and calculated according to a year in the visualized UI, and a font size in the tag cloud next to the graph is adjusted considering the weight.

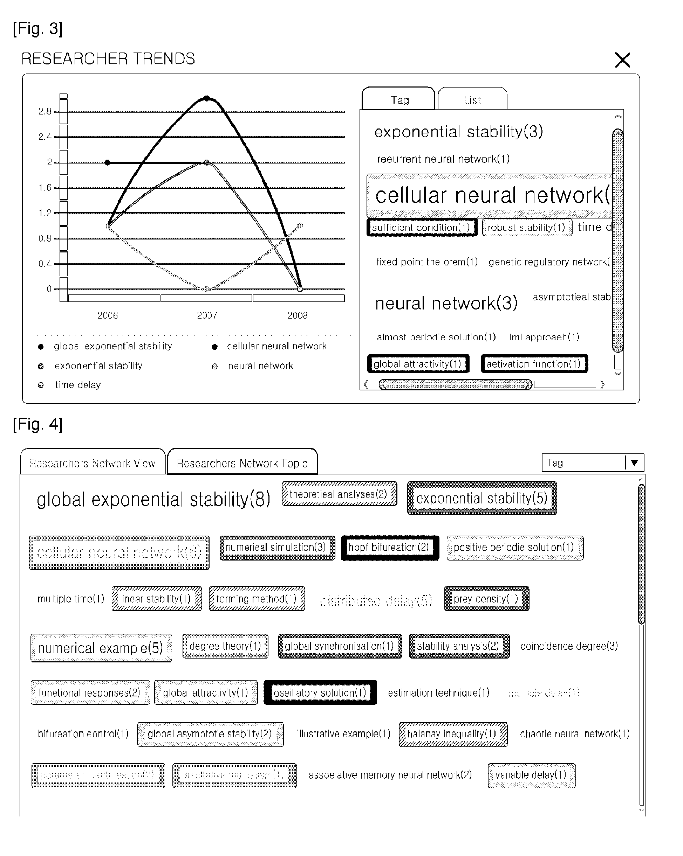

Referring to FIG. 3 in which a trend of a corresponding topic for each year displayed by the researcher research trend service provider is displayed through the UI (User Interface), the researcher research trend service provider 130 can identify research fields which have been performed by the researcher in every year and a research trend which has been changed. Through this service, the user can indirectly know a time and a field of a research intensively performed by a corresponding researcher and a change in a research trend.

To this end, a research trend for each year, that is, a topic trend according to a year is represented as a graph in a left side of FIG. 3 and represented as a tag cloud in a right side of FIG. 3.

An X axis indicates a year and an Y axis indicates a number of researches for each field in the graph showing a research trend for each year located in the left side of FIG. 3. Through the graph, a research field for each year in a high rank and a research field trend can be identified.

Such a service also selects one researcher, that is, the researcher A from the data "researcher-topic-year" extracted from the researcher topic information extractor 120, extracts data "researcher A-topic-year" included in the researcher A, and then arranges the data for each year.

Further, in the tag cloud shown in the right side of FIG. 3, a research topic having a heavier weight is expressed by a larger sized text and a conspicuous color so that a desired tag can be quickly found in the present invention. Since such a tag cloud is generally well known, its detailed description will be omitted.

Accordingly, the user can identify the main research field performed in a particular year through the UI displayed by the researcher research trend service provider 130 and thus easily grasp the research tendency of the researcher.

That is, a conventional researcher tendency shows theses for each year written by the researcher or the thesis trend for each year for an extracted representative topic of the researcher, but the present invention shows a trend of a field including a topic in which the researcher is interested, such as a time from which a research in a field A is started, a time where the research is most actively performed, a time where the research ends, a time from which a research in a field B is started, and a time where the research is most actively performed.

Meanwhile, the researcher related topic service provider 140 operated as the analysis service module extracts and analyzes a related topic by using a researcher network configured to have the same co-authors as those of the information extracted from the researcher topic information extractor 120 or configured to cite or be cited by the information extracted from the researcher topic information extractor 120. Then, the analyzed data is visually displayed through the UI (User Interface) such that researchers involved in the related topic are arranged.

Further, when the related topic is repeated, the researcher related topic service provider 140 displays the related topic with a weight, which is assigned to the related topic according to the frequency of the related topic.

For example, when a first researcher researches "a topic A, a topic B, a topic C, a topic D, and a topic E", a second researcher researches "a topic B, a topic C, a topic F, a topic G, and a topic H", and a third researcher researches "a topic A, a topic B, a topic H, a topic I, and a topic J", the first, second, and third researchers being included in a current network, a "researcher related topic" extracted from the network can be displayed like "topic A(2), topic B(3), topic C(2), topic D(1), topic E(1), topic F(1), topic G(1), topic H(2), topic I(1), and topic J(1)". At this time, numbers in brackets next to the topic represent weights.

That is, if many researchers are collected in the same group, a weight of a topic collaboratively researched by the researchers is increased.

This service is a service showing statistics for a main research field of researchers configured when the existing researcher network is generated.

The researcher network is configured by correlation between researchers such as a co-author or citation relation. The researcher network is already used frequently to extract the researcher related topic, but the researcher related topic can be extracted through a list of the researchers obtained through the researcher network.

Of course, a research topic of a corresponding group also can be determined through a list of all researchers as well as through the researcher network.

This service also uses the information "researcher-topic-year" extracted from the researcher topic information extractor 120.

When it is attempted to extract a particular researcher, the researcher is extracted from all researchers included in a corresponding group. When it is attempted to extract researcher information, research fields (topics) are arranged and repeated topics are processed as one topic which is assigned a weight.

Accordingly, main common research topics can be identified in the corresponding researcher group. The visualization can be provided through the tag cloud or the list.

Referring to FIG. 4 illustrating an example in which researchers involved in a related topic displayed by the researcher topic service provider are visually arranged through the UI, respective topics are displayed in a tag cloud type. Specifically, respective topics are displayed together with their weights such that the respective topics have different font sizes and colors so as to be easily distinguished.

Further, the similar researcher service provider 150 extracts a list of researchers having a similarity higher than a set similarity by comparing a list of all topics of the researcher with all topics of other researchers based on the information extracted from the researcher topic information extractor 120 operated as the information extraction module, and the extracted list can be visually displayed through the UI.

At this time, the similarity is obtained by calculating a percentage of each topic with respect to all topics in the list of the researcher and then summing percentages of topics identical to topics of another researcher in consideration of a frequency of the identical topics.

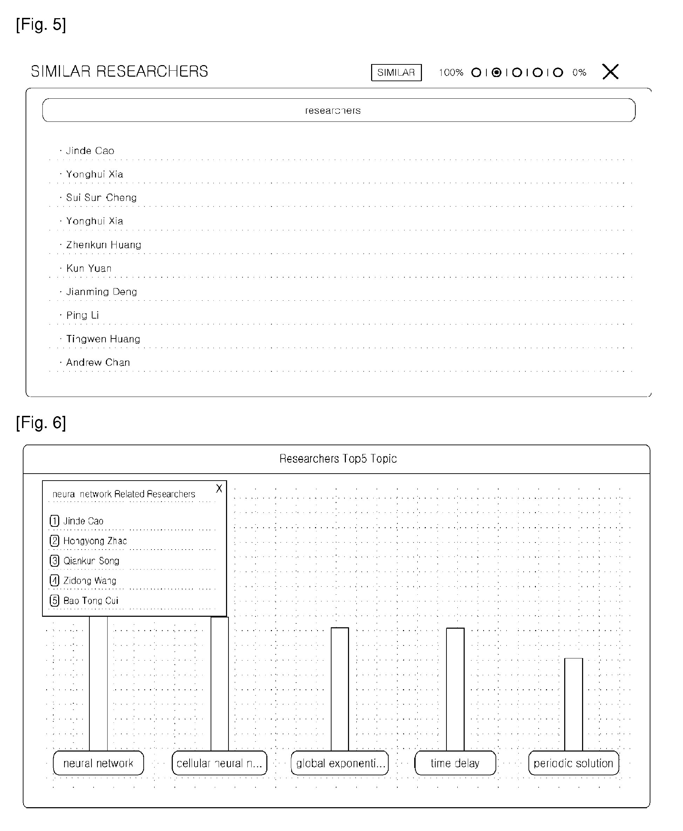

Referring to FIG. 5 illustrating an example in which a list of similar researchers displayed by the similar researcher service provider is visually displayed, the similar researcher service provider 150 provides researchers researching a similar field to that of the corresponding researcher. Accordingly, the user can know how similar research has been performed.

That is, the similar researcher can be obtained using the information "researcher-topic-year" extracted from the researcher topic information extractor 120. When the similar researchers are found using the year, researchers performing a similar research in the same year can be found and thus a more detailed comparison can be achieved.

When it is attempted to extract similar researchers, the similarity can be selected (0~100%).

When it is attempted to extract the similar researchers, it is preferable to compare researchers performing the similar research for each year (e.g. in 2002~2004), but the present invention compares all topics of each researcher with the list of all topics of researchers without considering the year.

The similarity is designated in a service execution, and the similarity is calculated considering the number of all topics of the researcher.

For example, if the number of all topic fields of Hong Gil Dong is ten, every time one topic of another researcher is matched with one of the ten topics, the similarity of 10% is added. That is, when there are five overlapped topics between two researchers, Hong Gil Dong and Hong Gil Soon, the similarity between the two researchers is 50%.

In such a manner, when similar researchers having a similarity higher than a desired similarity are found by comparing topics of all researchers, the found similar researchers are provided as a result value.

FIG. 5 shows a display of a list of researchers having a similarity of 80%.

Further, the related researcher recommendation service provider 160 operated as the analysis service module extracts a plurality of frequently researched topics from all theses of the corresponding researcher based on the information extracted from the researcher topic information extractor 120 operated as the information extraction module, and visually displays, through the UI, a list of researchers publishing many theses for the extracted respective topics, that is, researchers having many achievements.

The related researcher recommendation service provider 160 intends to recommend specialists in a main research field of the corresponding researcher. This has a similar function to a related search term in a general search portal site. However, the present invention directly provides specialists in a topic field of the corresponding researcher, so that the cumbersomeness of separately searching the specialists in the topic field of the corresponding researcher can be removed.

First, the corresponding researcher is extracted and then the topic is extracted as a Top N.

Then, researchers are extracted for respective topics of Top 1 to Top N from the data "researcher-topic-year" by using the selected topic Top N.

The M number of researchers (specialists) in the corresponding field who are most frequently involved in the corresponding topic is referred to as specialists in the corresponding field, and they are provided.

Referring to FIG. 6 illustrating an example in which a list of researchers publishing many theses for each topic displayed by the related researcher recommendation service provider is visually displayed through the UI, main topics "neural network", "cellular neural network", "global exponential", "time delay", and "periodic solution" are arranged on an X axis and the number of specialists in the corresponding topic field is represented on an Y axis. That is, 5 main research fields of a representative researcher are selected and represented as a graph. Then, every time a corresponding research field is selected, main specialists in the field are displayed. A shift to a corresponding researcher page is possible through the link, and thus the above services can be used.

FIG. 6 shows, when "neural network" is selected as a topic, five specialists for the corresponding topic displayed according to a rank.

The similar researcher provided by the similar researcher service provider 150 and the specialist provided by the related researcher recommendation service provider 160 are distinguished as follows.

The similar researcher provided by the similar researcher service provider 150 refers to a researcher having many research fields overlapping with those of a searched research.

For example, when a searched user "Hong Gil Dong" researches a topic 1, a topic 2, a topic 3, a topic 4, and a topic 5, a similar researcher of Hong Gil Dong corresponds to a researcher having the highest similarity and the largest number of topics overlapping with the topic 1, the topic 2, the topic 3, the topic 4, and the topic 5.

The specialists provided by the related researcher recommendation service provider 150 correspond to a specialist of a first topic (A, B, C, D, and E), a specialist of a second topic (F, G, H, and I), and a specialist of a third topic (J, K, L, M, N...) of Hong Gil Dong.

Meanwhile, one or more respective visualized UIs provided by the researcher research trend service provider 130, the researcher related topic service provider 140, the similar researcher service provider 150, and the related researcher recommendation service provider 150 are displayed as semantic service components in an OntoFrame researcher page.

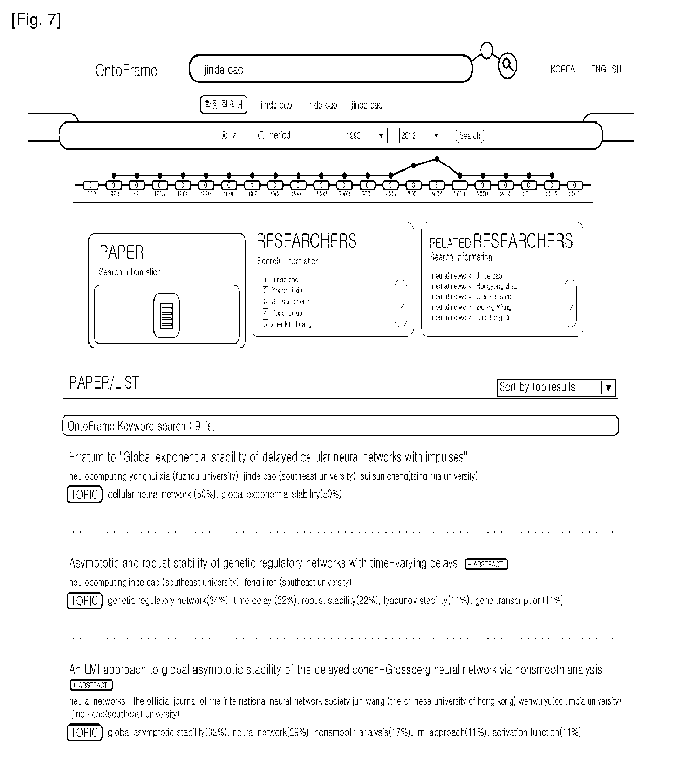

That is, referring to FIG. 7 illustrating an example in which UI screens which can be displayed according to the present invention are displayed as semantic service components in the OntoFrame researcher page, when a researcher "Jinde cao" is input to an existing UI of OntoFrame2008, windows horizontally indicated by a plurality of icons are displayed in the center of the screen. A window (PAPER) displaying a thesis published by the corresponding researcher is displayed in a left side, a window (RESEARCHERS) informing of a related researcher network is displayed in the center, and a window (RELATED RESEARACHERS) displaying a related researcher recommendation service is displayed in a central right side. Further, a plurality of icons are displayed in a right side end, wherein a researcher information window (RESEARCHER INFO) is displayed in a top side, a researcher research trend service window (RESEARACHER TREND) is displayed in a lower part of the researcher information window, and a similar researcher recommendation window (SIMILAR RESEARCHER) is displayed in a lower part of the researcher research trend service window. When a corresponding window is clicked, related UI screens can be displayed.

Hereinafter, a method of analyzing research information on a researcher will be described with reference to the drawings.

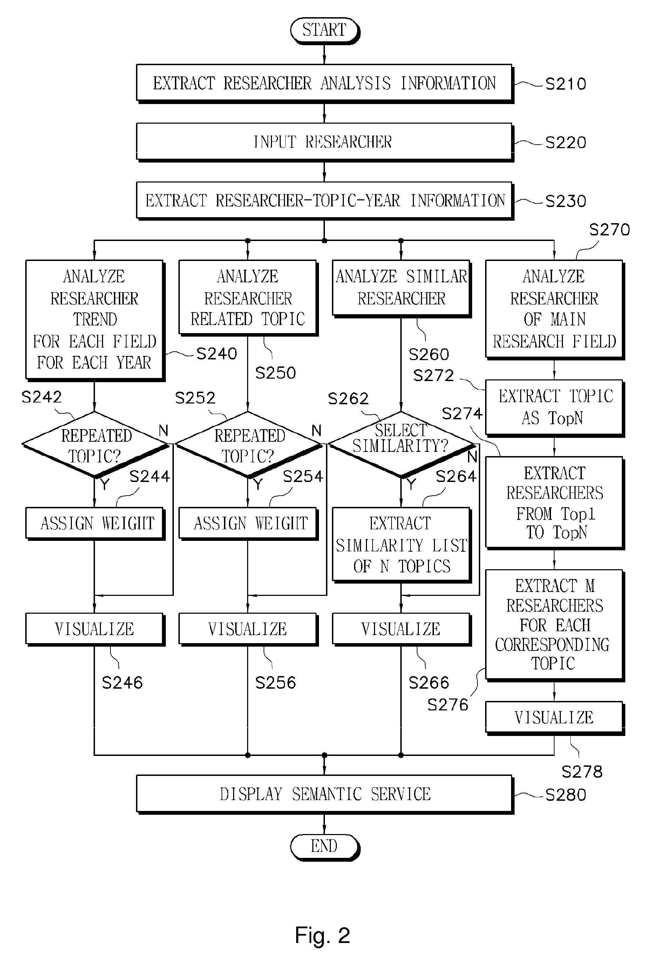

FIG. 2 is a flowchart for describing the method of analyzing research information on the researcher according to an embodiment of the present invention. As shown in FIG. 2, the researcher research information analysis system 110 performs a knowledge processing based on the URI (Uniform Resource Identifier) and the DBMS (DataBase Management System) and extracts analysis information of the researcher from the academic information service system for providing a knowledge information sharing service of the analysis information related to the researcher such as a thesis title, an author, an affiliated institution, bibliographic information, a year, an abstract, and country information by processing the knowledge information based on the URI (Uniform Resource Identifier) and the DMBS (DataBase Management System) in step S210.

At this time, the researcher research information analysis system 110 is configured to be used after extracting the topic from the original text of the corresponding thesis, extracting year information from the meta-information of the thesis, and converting data to data in a triple type by the ontology.

When a query for outputting the remaining information is submitted to the inference engine based on an input of researcher information, correlation between triples is inferred through the SPARQL (Simple Protocol and RDF Query Language) and then desired information is derived in step S220.

The researcher topic information extractor 120 extracts researcher information, topic information, and year information from the research information analysis system 110 in step S230. That is, when the researcher is input, the researcher topic information extractor 120 fetches desired information by inferring the correlation between the triples through the SPARQL, extracts the researcher information, the topic information, and the year information, and generates the correlation.

Further, the trend of the main research topic for each year is analyzed based on the information extracted from the researcher topic information extractor 120 in step S240.

One researcher such as a researcher A is selected from the data "researcher-topic-year" extracted from the researcher topic information extractor 120, data "researcher A-topic-year" included in the researcher A is extracted, and then, the data is arranged for each year.

It is determined whether there is a repeated topic based on the information extracted in step S240 in step S242.

The reason of the determination is to, when there is the repeated topic in the same year, grasp the research trend of the researcher by assigning a weight according to a frequency of the topic in the same year and thus identifying a main research field in a particular year.

When it is determined that there is the repeated topic in step 242, the weight is assigned in step S244.

If a topic A appears five times in the same year and a topic B appears only one time in the same year, such, the weight is assigned such that the topic A is set to five points and the topic B is set to one point.

When the weight is assigned in step S244 or there is no repeated topic in step S242, the data is visualized through the UI displaying a trend of the corresponding topic for each year based on the analyzed data in step S246.

The occurrence number of topics is counted and calculated according to a year in the visualized UI, and a font size in the tag cloud next to the graph is adjusted considering the weight.

Referring to FIG. 3, the user can indirectly know a field of a research performed by the researcher in every year, a change in a research trend, a time and a field of the research intensively performed by the corresponding researcher, and a change in a researcher tendency for the research.

Such a visualization indicates the topic trend according to the year through the graph and indicates it through the tag cloud in the right side of FIG. 3.

Further, the researcher related topic service provider 140 extracts and analyzes the related topic by using the researcher network co-author or the citation relation with the information extracted from the researcher topic information extractor 120 operated as the information extraction module in step S250.

Statistics are shown for the main research field of researchers configured when the existing researcher network is generated.

When the related topic is repeated, the related topic can be displayed after being assigned a weight according to frequency of the related topic.

That is, it is determined whether the related topic is repeated in step S2502. When the related topic is repeated, the weight is assigned according to the frequency of the related topic.

As described, when a first researcher researches "a topic A, a topic B, a topic C, a topic D, and a topic E", a second researcher researches "a topic B, a topic C, a topic F, a topic G, and a topic H", and a third researcher researches "a topic A, a topic B, a topic H, a topic I, and a topic J", the first, second, and third researchers being included in the a current network, a "researcher related topic" extracted from the network can be displayed like "topic A(2), topic B(3), topic C(2), topic D(1), topic E(1), topic F(1), topic G(1), topic H(2), topic I(1), and topic J(1)". At this time, numbers in brackets next to the topic represent weights.

That is, if many researchers are collected in the same group, a weight of a topic collaboratively researched by the researchers is increased.

When the weight is assigned in step S254, researchers involved in related topics are arranged and visually displayed through the UI in step S256.

Referring to the example of the visualization in FIG. 4, each topic is displayed by the tag cloud. The topics can be easily distinguished through different font sizes and colors according to the weight and the respective topics are displayed together with their weights.

Further, the similar researcher service provider 150 operated as the analysis service module extracts a list of researchers having a similarity higher than a similarity set by comparing a list of all topics of the researcher with all topics of other researchers based on the information extracted from the researcher topic information extractor 120 operated as the information extraction module in step S260.

The object of step S260 is to grasp a level of similarity between researchers performed by respective researchers by providing researchers who perform a research in a field overlapping with that of the corresponding researcher.

The researcher can select the most similar researcher by selecting a similarity.

That is, the researcher can select the similarity (0~100%) in extracting the similar researcher in step 262.

At this time, the similarity is obtained by calculating a percentage of each topic with respect to all topics in the list of the researcher and then summing percentages of topics identical to topics of another researcher in consideration of a frequency of the identical topics.

When it is attempted to extract the similar researchers, it is preferable to compare researchers performing the similar research for each year (e.g. in 2002~2004), but the present invention compares all topics of each researcher with the list of all topics of researchers without considering the year.

The similarity is designated in a service execution, and the similarity is calculated considering the number of all topics of the researcher.

When the similarity is selected in step 262, the similar researcher service provider 150 extracts a similarity list for selected N topics in step S264.

For example, if the number of all topic fields of

Hong Gil Dong is ten, every time one topic of another researcher is matched with one of the ten topics, the similarity of 10% is added. That is, when there are five overlapped topics between two researchers, Hong Gil Dong and Hong Gil Soon, the similarity between the two researchers is 50%.

In such a manner, similar researchers having a similarity higher than a desired similarity can be obtained by comparing topics of all researchers, and a resulting value of the similar researcher is visualized through the UI in step 266.

Referring to the example of the visualization in FIG. 5, the similar researcher service provider 150 provides researchers having a research field overlapping with that of the corresponding researcher. Accordingly, a level of similarity can be grasped between researches that have been performed.

That is, the similar researcher can be obtained using the information "researcher-topic-year" extracted from the researcher topic information extractor 120. When the similar researchers are found using the year, researchers performing a similar research in the same year can be found and thus a more detailed comparison can be achieved.

FIG. 5 illustrates a list of researchers having the similarity of 80%.

Further, the related researcher recommendation service provider 160 extracts a plurality of frequently researched topics from all theses of the corresponding researcher based on the information extracted from the researcher topic information extractor 120, and analyzes a list of specialists corresponding to the researchers having submitted many theses for each extracted topic.

Accordingly, the cumbersomeness of separately searching for the specialists for the topic of the corresponding researcher is removed through directly providing the specialists in the topic field of the corresponding researcher.

The extracted topic of the corresponding researcher is extracted as a top N in step S272.

Then, researchers are extracted, as specialists, for respective topics of Top 1 to Top N from the data "researcher-topic-year" by using the selected topic Top N in step S274.

The M number of researchers (specialists) in the corresponding field who are most frequently involved in the corresponding topic is referred to as specialists in the corresponding field, and they are provided in step S276.

The provided M specialists for respective topics are visually displayed through the UI in step S278.

Referring to FIG. 6 illustrating the example of the visualization through the UI, five main research fields of a representative researcher are selected and indicated by the graph, and every time a corresponding research field is selected, main specialists in the field are displayed. A shift to a corresponding researcher page is possible through the link, and thus the above services can be used.

Further, one or more of data visualized in steps S246, S256, S266, and S278 is displayed as semantic service components in an OntoFrame researcher page.

That is, referring to FIG. 7, by displaying windows related to the present invention, the present invention enables a one-stop display through a search for only a researcher without multi-step searches for a research trend of the researcher, a related topic researcher, a similar researcher, and other specialists in a main research field.

The methods according to the present invention can be implemented step-by-step by a computer-readable code in a computer-readable recording medium. The computer-readable recording medium, which is a recording apparatus storing data readable by a computer system, includes a ROM (Read-Only-Memory), a RAM (Random Access Memory), a Cache, a hard disk, a magnetic tape, a floppy disk, a magnetic tape and the like. Further, the computer-readable recording medium includes a device implemented in a type of a carrier wave, for example, transmission through an internet and the like. Furthermore, the computer-readable recording medium can be stored as a computer-readable code in a distribution scheme and implemented by being distributed in the computer system connected to a network.

While the present invention has been shown and described with reference to certain exemplary embodiments and drawings thereof, it will be understood by those skilled in the art that various changes in form and details may be made therein without departing from the spirit and scope of the invention as defined by the appended claims.

### Industrial Applicability

The present invention relates to a technology for providing information related to a researcher through an ontology based-reference analysis, and has effects of enabling a user to view a trend of a topic field in more detail since information extracted from analysis information related to the researcher is provided through a UI which can be grasped at a glance, and enabling the user to view a main research topic and research topics handled with interests at a glance, and enabling the user to view other specialists in the main research field at the same time.

## Claims

1. An apparatus for analyzing research information of a researcher, the apparatus comprising:
an academic information service system for processing such that a knowledge information sharing service of analysis information related to the researcher such as a thesis title, an author, an affiliated institution, bibliographic information, a year, an abstract, a topic, and country information can be provided by performing a knowledge processing based on a URI (uniform Resource Identifier) and a DBMS (DataBase Management System);
a researcher research information analysis system for extracting the analysis information related to the researcher from the academic information service system;
an information extraction module for extracting researcher information, topic information, and year information from the researcher research information analysis system; and
an analysis service module for analyzing the information extracted from the information extraction module as data according to a weight, a similarity, and a frequency, and providing the data.

2. The method as claimed in claim 1, wherein the researcher research information analysis system extracts a topic from an original text of a corresponding thesis of the researcher, extracts year information from meta-information of the thesis, converts data to data in a triple type by an ontology, and then stores the converted data.

3. The method as claimed in claim 2, wherein the information extraction module fetches desired information by inferring correlation between triples through a query such as an SPARQL (Simple Protocol and RDF Query Language) when the researcher is input.

4. The method as claimed in claim 3, wherein the analysis service module comprises a researcher research trend service provider for displaying all main research topics of the corresponding researcher for each year based on the information extracted from the information extraction module, and visually displaying a trend of a corresponding topic for each year through a UI (User Interface).

5. The method as claimed in claim 4, wherein, when there is a repeated topic in an equal year, the researcher research trend service provider assigns a weight to the repeated topic according to a frequency in the equal year and displaying the repeated topic together with the weight.

6. The method as claimed in claim 3, wherein the analysis service module comprises a researcher related topic service provider for extracting related topics by using a researcher network configured to have co-authors or a citation relation with the information extracted from the information extraction module, arranging the related topics, and visually displaying the related topics through a UI (User Interface).

7. The method as claimed in claim 6, wherein, when the related topic is repeated, the researcher related topic service provider assigns a weight to the repeated related topic according to a frequency, and displaying the repeated related topic together with the weight.

8. The method as claimed in claim 3, wherein the analysis service module comprises a similar researcher service provider for comparing topics included in a list of all topics of the researcher with all topics of other researchers based on the information extracted from the information extraction module and visually displaying a list of researchers having a similarity higher than a set similarity through a UI (User Interface).

9. The method as claimed in claim 8, wherein the similarity is obtained by calculating a percentage of each topic with respect to all topics in the list of the researcher and then summing percentages of topics identical to topics of another researcher in consideration of a frequency of the identical topics.

10. The method as claimed in claim 3, wherein the analysis service module comprises a related researcher recommendation service provider for extracting a plurality of topics having a high research frequency in all theses of the corresponding researcher based on the information extracted from the information extraction module, and visually displaying a list of researchers having many achievements for each corresponding topic through a UI (User Interface).

11. The method as claimed in claim 5, 7, 9, or 10, wherein one or more of respective visualized UIs provided by the researcher research trend service provider, the researcher related topic service provider, the similar researcher service provider, and the related researcher recommendation service provider are displayed as a semantic service component of an Ontoframe researcher page.

12. A method of analyzing research information of a researcher, which uses a researcher research information analysis system providing analysis information related to the researcher such as a thesis title, an author, an affiliated institution, bibliographic information, a year, an abstract, a topic, country information, the method comprising the steps of:
(a) extracting researcher information on the researcher, topic information, and year information from the research information analysis system;
(b) inputting a researcher;
(c) analyzing the researcher information on the researcher, the topic information, and the year information as data according to a weight, a similarity, and a frequency, and providing the data; and
(d) visually displaying the provided analysis data through a UI (User Interface).

13. The method as claimed in claim 12, wherein, in the step (a), a topic of an original text of a corresponding thesis for each researcher is extracted using the researcher research information analysis system, year information is extracted from meta-information of the thesis, data is converted to data in a triple type by an ontology, and the converted data is stored.

14. The method as claimed in claim 12, wherein, in the step (b), related information is extracted by inferring correlation between triples through a query such as an SPARQL (Simple Protocol and RDF Query Language) when the researcher is input.

15. The method as claimed in claim 12, wherein the step (c) comprises:
extracting all main research topics of the corresponding researcher for each year based on the information extracted in the step (b);
visually displaying a trend of a corresponding topic for each year through a UI (User Interface); and
when there is a repeated topic in an equal year, assigning a weight to the repeated topic according to a frequency of the repeated topic in the equal year and displaying the repeated topic together with the weight.

16. The method as claimed in claim 12, wherein the step (c) comprises:
extracting related topics by using a researcher network configured to have co-authors or a citation relation with the information extracted in the step (b);
arranging the related topics, and visually displaying the related topics through a UI (User Interface); and
when the related topic is repeated, assigning a weight to the repeated related topic according to a frequency, and displaying the repeated related topic together with the weight.

17. The method as claimed in claim 12, wherein the step (c) comprises:
comparing topics included in a list of all topics of the researcher with all topics of other researchers based on the information extracted in the step (b) and visually displaying a list of researchers having a similarity higher than a set similarity through a UI (User Interface); and
obtaining the similarity by calculating a percentage of each topic with respect to all topics in the list of the researcher and then summing percentages of topics identical to topics of another researcher in consideration of a frequency of the identical topics.

18. The method as claimed in claim 12, wherein the step (c) comprises:
extracting a plurality of topics having a high research frequency in all theses of the corresponding researcher based on the information extracted in the step (b); and
visually displaying a list of researchers having many achievements for each corresponding topic through a UI (User Interface).

19. The method as claimed in claim 15, 16, 17, or 18, further comprising displaying one or more of respective visualized UIs provided by the researcher research trend service provider, the researcher related topic service provider, the similar researcher service provider, and the related researcher recommendation service provider as a semantic service component of an Ontoframe researcher page.
